# EUROPEAN PATENT SPECIFICATION

(11) **EP 1 842 386 B1**
(45) Date of publication and mention of the grant of the patent: **11.02.2015**
(21) Application number: 05824117.5
(22) Date of filing: 08.12.2005
(51) Int. Cl.: H04W 36/00

(54) **DOWNLINK DATA OPTIMIZATION FOR PACKET SWITCHED HANDOVER**
ABWÄRTSSTRECKEN-DATENOPTIMIERUNG FÜR PAKETVERMITTELTES HANDOVER
OPTIMISATION DE DONNEES DE LIAISON DESCENDANTE POUR TRANSFERT A COMMUTATION DE PAQUETS

(30) Priority: 28.01.2005 US 647950 P; 21.03.2005 US 95312
(43) Date of publication of application: 10.10.2007
(73) Proprietor: Vringo Infrastructure Inc., New York, NY 10017 (US)
(72) Inventor: KANGAS, Arto Ta, FI-02320 ESPOO Espoo (FI); VIRTANEN, Tapani, FI-02970 ESPOO Espoo (FI)
(74) Representative: Hale, Peter
(86) International application number: PCT/IB2005/003728
(87) International publication number: WO 2006/079879

(56) References cited:
- EP-A1- 1 209 931
- EP-A2- 1 318 691
- EP-A2- 1 318 691
- WO-A1-01/35586
- WO-A2-2004/021582
- US-A1- 2002 107 022
- US-A1- 2004 176 093
- "3rd Generation Partnership Project; Technical Specification Group GERAN; Packet-switched handover for GERAN A/Gb mode; Stage 2 (Release 6)", 3GPP STANDARD; 3GPP TS 43.129, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V6.0.0, 1 November 2004 (2004-11-01), pages 1-66, XP050378279,
- "3rd Generation Partnership Project; Technical Specification Group GSM/EDGE Radio Access Network; Mobile Switching Centre - Base Station System (MSC-BSS) interface; Layer 3 specification (Release 6)", 3GPP STANDARD; 3GPP TS 48.008, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V6.7.0, 1 November 2004 (2004-11-01), pages 1-154, XP050379515,
- INFINEON: "Improvement of the suspension duration due to a cell update", 3GPP DRAFT; GP-042651_CELLUPDATE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Cape Town, South Africa; 20041103, 3 November 2004 (2004-11-03), XP050012571, [retrieved on 2004-11-03]
- NOKIA: "DL Data Transfer for optimized Intra-BSS packet switched Handover", 3GPP DRAFT; GP-050080, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. G2-050080, 7 March 2005 (2005-03-07), - 11 March 2005 (2005-03-11), pages 1-2, XP002630342, Helsinki, Finland [retrieved on 2005-03-30]

## Description

The present invention relates to global system for mobile communications (GSM) and more specifically to optimization of downlink data transfer during handovers of packet switched connections.

The standardization of packet switched handover is ongoing, e.g., on 3GPP Technical Specification Group GERAN (GSM/EDGE radio access network). Currently a packet switched handover of an optimized intra-BSS (base station subsystem) handover case is defined in stage 2 document 3GPP TS 43.129 V6.0.0 (2004-11) "Packet-Switched Handover for GERAN A/Gb mode". In that case the SGSN (serving GPRS support node, wherein GPRS stands for general packet radio service) does not participate on the actual handover, but still a cell update and flush procedure is needed to restart the transmission on downlink on the target cell.

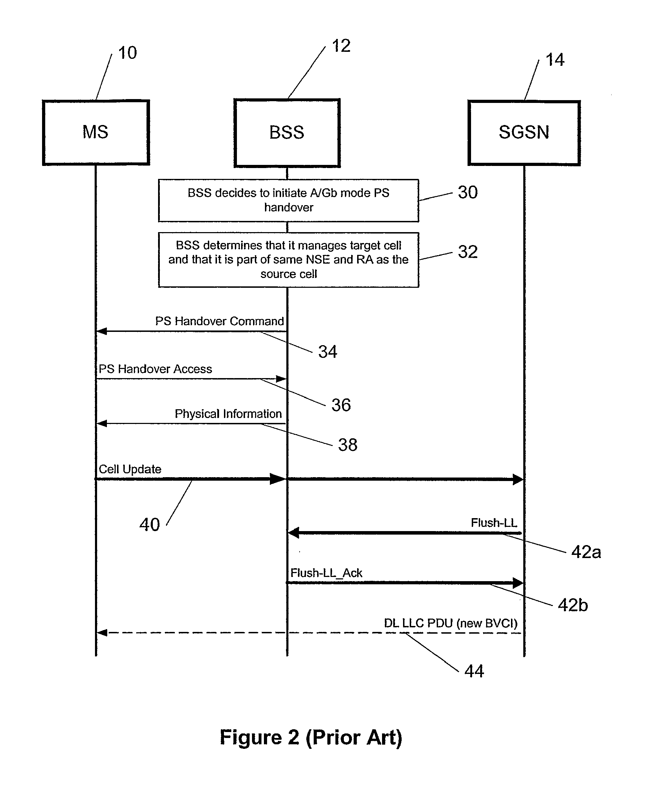

The problem is that during a packet switched handover the continuation of downlink data transmission is delayed because the SGSN waits for the cell update from a mobile station (MS) and after that a flush procedure has to be performed by the SGSN in order to know the situation on the actual data flow. The restart of a downlink transmission on the target cell starts currently after cell update (step **40)** and flush procedures (steps **42a** and **42b**), as shown in Figure 2, which presents the optimized intra-BSS case as an example. The procedure of Figure 2 is based on the current version of the stage two document 3GPP TS 43.129 V6.1.0 (2004-11) as discussed in more detail below.

WO 2004/021582 A1 describes a method in which, when a remote unit reestablishes itself in a target cell, a source packet control unit determines that the cell reselection was successful and selectively transfers radio access capability information to the target packet control unit. The target packet control unit immediately is able to transfer downlink data arriving from the serving GPRS support node to the remote unit.

The object of the present invention is to provide a method for improving the performance of downlink data transfer during handovers of packet switched connections specifically, e.g., by eliminating a need for a cell update and a flush procedure.

According to a first aspect of the invention, there is provided a method as specified in claim 1.

According to a first aspect of the invention, there is provided a system as specified in claim 6.

Optional features are specified in the dependent claims.

According further still to the first aspect of the invention, the packet switched handover may correspond to an inter-BSS procedure.

According yet further still to the first aspect of the invention, the packet switched handover may be performed within a GSM/EDGE radio access network.

According to a second aspect of the invention, a computer program product comprises: a computer readable storage structure embodying computer program code thereon for execution by a computer processor with the computer program code characterized in that it includes instructions for performing the steps of the first aspect of the invention indicated as being performed by any component or a combination of components of the base station subsystem, the mobile station, or the serving general packet radio service (GPRS) support node.

According to a third aspect of the invention, a system for improving the performance of a downlink data transfer during a packet switched handover, comprises: a base station subsystem, for changing a source cell to a target cell in a context of the packet switched handover and for informing about the cell change right after the change; and a serving general packet radio service (GPRS), responsive to the informing such that this allows starting immediately the downlink data transfer, thus reducing a service interruption caused by the packet switched handover.

According further to the third aspect of the invention, the changing the source cell to the target cell may be performed by a base station subsystem using a normal communication with a mobile station. Further, the informing the serving general packet radio service (GPRS) support node about the cell change may be performed by the base station subsystem, and after the informing the mobile station may not perform a cell update procedure. Still further, after informing the serving general packet radio service (GPRS) support node about the cell change, flush procedures may not be performed.

Further according to the third aspect of the invention, the informing may be performed by a base station subsystem.

Still further according to the third aspect of the invention, the packet switched handover may correspond to an optimized intra-BSS procedure or a non-optimized intra-BSS procedure.

The benefits of the present invention include:
- A downlink transmission gap is minimized after a packet switched handover.
- An uplink transmission gap is minimized if a dummy LLC (logical link control) frame is used to perform a cell update.

For a better understanding of the nature and objects of the present invention, reference is made to the following detailed description taken in conjunction with the following drawings, in which:
Figure 1 is a block diagram demonstrating a communication system environment for implementing a packet switched handover according to the present invention;
Figure 2 is a flow diagram illustrating a packet switched handover procedure based on a stage 2 document 3GPP TS 43.129 V6.1.0 (2004-11) for an optimized intra-BSS case, according to the prior art; and
Figure 3 is a flow diagram illustrating a packet switched handover for an optimized intra-BSS case, according to the present invention.

The present invention provides a methodology for improving the performance of downlink (DL) data transfer during handovers of packet switched connections by informing the SGSN (serving GPRS support node, wherein GPRS stands for a general packet radio service) about a cell change and reducing the service interruption during the cell change. Furthermore, compared to the existing procedure described in the 3GPP TS 43.129 V6.1.0 (2004-11), the present invention eliminates the need for a cell update and a flush procedure as discussed below in detail. The present invention can be applied to GERAN (GSM/EDGE radio access network).

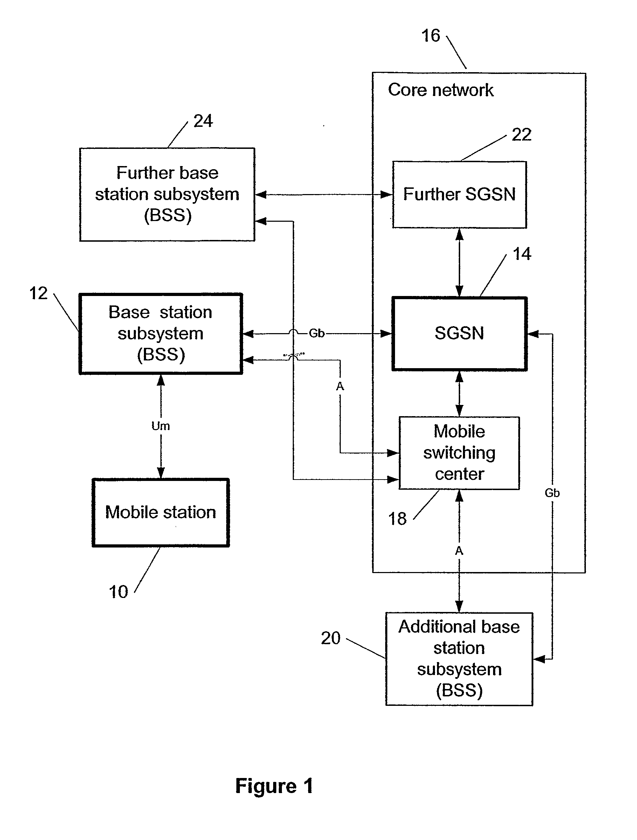

Figure 1 shows one example among others of a block diagram demonstrating a communication system environment for implementing a packet switched handover in GERAN A/Gb mode, according to the present invention. It shows a mobile station (MS) **10** communicating with a base station subsystem (BSS) **12** through a Um interface. The BSS **12** is communicating with a SGSN **14** and a mobile switching center (MSC) **18** of a core network **16** through interfaces Gb and A, respectively. Also Figure 1 shows an additional base station (BSS) **20** communicating with the same SGSN **14** and the MSC **18** through the interfaces Gb and A, respectively. A further SGSN **22** of the core network **16** and a further BSS **24,** communicating with the SGSN **22** and the MSC center **18,** are show in Figure 1 as well.

Figure 2 is an example among others of a flow diagram illustrating a packet switched handover procedure based on the stage 2 document 3GPP TS 43.129 V6.1.0 (2004-11) for an optimized intra-BSS case, according to the prior art. For the optimized intra BSS case the source and target cells are associated with the same network service entity (NSE) and the same routing area (RA). In step **30** shown in Figure 2, the BSS **12** decides that a handover is required based on received measurement reports. In step **32,** the BSS **12** determines that it manages resources for both cells (target and source cells) and that they are associated with the same NSE and the same RA. In step **34,** the BSS **12** sends the PS Handover Command message to the MS **10.** In a step **36,** the MS **10** tunes to the radio channel and the timeslot allocated in the target cell by the BSS **12** and sends the PS Handover Access (Handover Reference) message in the form of four handover access bursts) to the BSS **12** on the allocated channel. In a step **38,** the BSS **12** sends a Physical Information message to the MS **10** for synchronization.

In a step **40,** the MS sends an arbitrary LLC frame to the SGSN **14,** which in the SGSN is interpreted as an implicit cell update. To make the handover interruption short the MS sends this message immediately after receiving the Physical Information message in step **38** or, in the synchronized network case, immediately after the sending of the PS Handover Access message of step **36.** Upon reception of the first correct RLC/MAC (radio link control/medium access control) block (sent in a normal burst format) from the MS **10,** the BSS **12** releases the radio resources in the source cell. The reception of the Cell Update message at the SGSN **14** triggers the sending of downlink data to the new cell using a new BVCI (BSSGP virtual connection identifier, wherein BSSGP stands for a base station subsystem GPRS protocol) if it is addressed by a different BVCI (as discussed below).

Next steps **42a** and **42b** relates to the flush procedure mentioned above. In a step **42a,** the SGSN **14** responds to the Cell Update with a FLUSH-LL message. In a step **42b,** the BSS **12** returns the FLUSH-LL_ACK message indicating if unsent LLC PDUs (logical link control/protocol data unit) have been deleted or transferred to a new cell. Finally, in a step **44,** the first DL (downlink) PDU received by the BSS with the new-BVCI allows the BSS **12** to clear the relationship to the old BVCI.

More detailed description of steps **30** through **44** described above can be found in the stage 2 document 3GPP TS 43.129 V6.1.0 (2004-11), section 5.1.2.4.

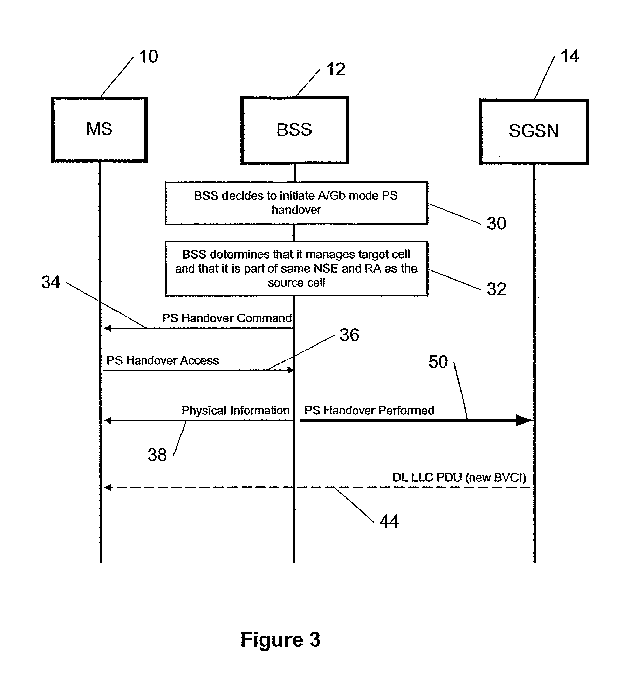

Figure 3 is an example among others of a flow diagram illustrating a packet switched handover for an optimized intra-BSS case, according to the present invention. Steps **30-38** and **44** are the same as in the prior art Figure 2. The major difference with the prior art of Figure 2 is that steps **40, 42a** and **42b** are omitted, according to the present invention, as demonstrated in Figure 3.

Since the BSS **12** (i.e., a base station controller (BSC) of the BSS **12,** not shown in Figure 1) selects the target cell, it is logical and beneficial that it also informs the SGSN **14** about the cell change. This way, according to the present invention, in a step **50,** the SGSN **14** is informed (e.g., by the BSS **12** through the Gb interface) right after the MS (mobile station) **10** gets access on the target cell, which reduces the gap on the downlink transmission, because the cell update and flush procedures are eliminated as stated above, as shown in Figure 3 (compare with the prior art Figure 2 for the optimized intra-BSS procedure of 3GPP TS 43.129 V6.1.0 (2004-11)).

Figures 2 and 3 represent only one example for an optimized intra-BSS case. Furthermore, according to the present invention, a non-optimized intra-BSS case (SGSN controlled) and the inter-BSS case can be also optimized by omitting the cell update procedure. The inter-BSS case can include an intra SGSN case (e.g., a handover between cells of the BSS **12** and an additional BSS **20** communicating with the SGSN **14** as shown in Figure 1) or an intra SGSN case (e.g., a handover between cells of the BSS **12** and a further BSS **24** communicating with a further SGSN **22** as shown in Figure 1).

Also, according to the present invention, if steps **40, 42a** and **42b** are omitted an uplink transmission gap can be minimized as well. In the prior art a dummy LLC (logical link control) frame was frequently used to perform a cell update, thus minimizing the downlink transmission gap because the SGSN could start the downlink transmission sooner when a short LLC frame (e.g., the dummy LLC frame) was used for the cell update with faster handling of that short LLC frame. According to the present invention, sending the dummy LLC cell is not necessary any more and the mobile station **10** can send the LLC frame with a payload data right away after the PS handover is performed, thus minimizing the uplink transmission gap (e.g., in principle after step **38).**

Thus, according to the present invention, the mobile station (MS) can be informed about said cell change in step **34** which allows starting immediately said uplink data transfer as discussed above, thus further reducing said service interruption caused by said packet switched handover.

The radio interface packet switched (PS) Handover Command message **34** shall contain an indication that a cell update is handled by the BSS **12,** such that the MS **10** can omit the procedure and start the actual uplink data transmission right after access on the target cell.

For the optimized intra-BSS case a target BSC is the same as a source BSC so it knows based on the source and target cells whether the RA (routing area) stays the same or changes during the packet switched handover. For the optimized intra-BSS case the source and target cells are associated with the same network service entity (NSE) and the same routing area (RA).

For the non-optimized intra-BSS case and inter-BSS case the target BSC knows based on information elements a Source Cell Identifier and a Target Cell Identifier (inside a PS Handover Request from the SGSN **14** to the target BSS **12**) whether the RA stays the same or changes during the packet switched handover. If the RA stays the same, the target BSC (e.g., the BSS **12, 20** or **24**) shall handle the cell update towards the corresponding SGSN (e.g., the SGSN **14** or **22**) and the MS **10** is informed. If the RA changes, it is up to the MS **10** to perform an RA update towards the SGSN **14** as currently defined in the standardization.

CS (circuit switched) type of Handover Performed message (per 3GPP TS 48.008 V6.7.0 (2004-11)) which is also called a PS Handover Performed message (as in the step **34** of Figures 2 and 3) could be used for to reducing the gap for a downlink data transmission.

For the optimized intra-BSS case, according to the present invention, with a message indicating the same as the BSSGP (base station subsystem GPRS protocol) Flush-LL-Ack message, data could be forwarded to the target cell and the source side radio resources could be released by the BSS **12** upon reception of the first correct uplink RLC/MAC (radio link control/medium access control) block (sent in a normal burst format) from the MS **10** (i.e., the uplink data reception from the MS **10** by the target cell triggers downlink data forwarding and releasing of the source side radio resources by the BSS **12**).

According to the present invention, for the non-optimized intra-BSS case and the inter-BSS case the source side radio resources are still released by the SGSN, but the downlink data transmission gap is reduced by the omission of the cell update procedure as described above. The PS Handover Performed message (refer to step **50**) shall therefore contain element information such as a TLLI (temporary logical link identity), a Cell Identifier (including RAC, i.e., routing area code), a Flush Action and a Number of Octets Affected. A new information element (for the target cell) "new BVCI" (BSSGP virtual connection identifier) is needed as well, if for the optimized intra-BSS case the message is not sent on the p-t-p (point-to-point) BVCI, but instead on the signalling BVCI.

It is to be understood that the above-described arrangements are only illustrative of the application of the principles of the present invention. Numerous modifications and alternative arrangements may be devised by those skilled in the art without departing from the scope of the present invention, and the appended claims are intended to cover such modifications and arrangements.

## Claims

1. A method for improving the performance of a downlink data transfer during a packet switched handover, wherein said packet switched handover corresponds to an optimized intra-BSS handover procedure, comprising:
changing a source cell to a target cell in a context of said packet switched handover; and
informing a serving general packet radio service support node (14) about said cell change after said change as the only required signalling with the serving general packet radio service support node to allow said downlink data transfer to restart immediately, for reducing a service interruption caused by said packet switched handover, wherein said informing is performed by a base station subsystem (12) and does not comprise sending a message from a mobile station (10) to said serving general packet radio service support node.

2. A method according to claim 1 further comprising:
informing said mobile station (10) about said cell change after said change, which allows an uplink data transfer to restart immediately, thus further reducing said service interruption caused by said packet switched handover.

3. A method according to claim 1, wherein said changing said source cell to said target cell is performed by said base station subsystem (12) communicating with said mobile station (10).

4. A method according to claim 1, wherein said packet switched handover is performed within a GSM/EDGE radio access network.

5. A computer program product comprising: a computer readable storage structure embodying computer program code thereon for execution by a computer processor, wherein said computer program code comprises instructions for performing the method of claim 3 .

6. A system for improving the performance of a downlink data transfer during a packet switched handover, wherein said packet switched handover corresponds to an optimized intra-BSS handover procedure, comprising:
means (12) for changing a source cell to a target cell in a context of a packet switched handover; and
means (12) for informing a serving general packet radio service support node (14) about said cell change after said change as the only required signalling with the serving general packet radio service support node to allow restarting immediately a downlink data transfer, for reducing a service interruption caused by said packet switched handover, wherein said means for informing comprises a base station subsystem and wherein said informing does not comprise sending a message from a mobile station (10) to said serving general packet radio service support node.

7. A system according to claim 6, wherein said means (12) for changing said source cell to said target cell is configured to communicate with said mobile station (10).

8. A system according to claim 7, wherein said means (12) for informing said serving general packet radio service support node about said cell change is configured, after said informing, not to perform a cell update procedure.

9. A system according to claim 6, wherein said packet switched handover is performed within a GSM/EDGE radio access network.

10. A system according to claim 6, further comprising:
means for further forwarding downlink data from the source cell to the target cell and for releasing radio resources in said source cell right after said cell change, which allows restarting immediately said downlink data transfer, thus reducing said service interruption caused by said packet switched handover.

## Patentansprüche

1. Verfahren zur Verbesserung der Leistung einer Downlink-Datenübertragung während einer paketvermittelten Übergabe, wobei die paketvermittelte Übergabe einem optimierten Intra-BSS-Übergabevorgang entspricht, wobei das Verfahren umfasst:
Ändern einer Quellzelle in eine Zielzelle in einem Kontext der paketvermittelten Übergabe; und
Informieren eines Serving General Packet Radio Service Support Node (14) über die Zelländerung nach der Änderung als einzig erforderliche Signalisierung an den Serving General Packet Radio Service Support Node, um zu ermöglichen, dass die Downlink-Datenübertragung unverzüglich neu starten kann, um eine durch die paketvermittelte Übergabe hervorgerufene Betriebsunterbrechung zu verkürzen, wobei das Informieren von einem Basisstationsubsystem (12) durchgeführt wird und kein Senden einer Nachricht von einer mobilen Station (10) an den Serving General Packet Radio Service Support Node umfasst.

2. Verfahren nach Anspruch 1, welches ferner umfasst:
Informieren der mobilen Station (10) über die Zelländerung nach der Änderung, wodurch eine Uplink-Datenübertragung unverzüglich neu starten kann, wodurch die durch die paketvermittelte Übergabe hervorgerufene Betriebsunterbrechung weiter verkürzt wird.

3. Verfahren nach Anspruch 1, wobei das Ändern der Quellzelle in die Zielzelle von dem Basisstationsubsystem (12) durchgeführt wird, das mit der mobilen Station (10) kommuniziert.

4. Verfahren nach Anspruch 1, wobei die paketvermittelte Übergabe innerhalb eines GSM/EDGE-Funkzugangsnetzes durchgeführt wird.

5. Computerprogrammprodukt, das umfasst: eine computerlesbare Speicherstruktur, die einen Computerprogrammcode zur Ausführung durch einen Prozessor enthält, wobei der Computerprogrammcode Anweisungen zum Durchführen des Verfahrens nach Anspruch 3 umfasst.

6. System zur Verbesserung der Leistung einer Downlink-Datenübertragung während einer paketvermittelten Übergabe, wobei die paketvermittelte Übergabe einem optimierten Intra-BSS-Übergabevorgang entspricht, wobei das System umfasst:
Mittel (12) zum Ändern einer Quellzelle in eine Zielzelle in einem Kontext einer paketvermittelten Übergabe; und
Mittel (12) zum Informieren eines Serving General Packet Radio Service Support Node (14) über die Zelländerung nach der Änderung als einzig erforderliche Signalisierung an den Serving General Packet Radio Service Support Node, um einen unverzüglichen Neustart einer Downlink-Datenübertragung zu ermöglichen, um eine durch die paketvermittelte Übergabe hervorgerufene Betriebsunterbrechung zu verkürzen, wobei das Mittel zum Informieren ein Basisstationsubsystem umfasst und wobei das Informieren kein Senden einer Nachricht von einer mobilen Station (10) an den Serving General Packet Radio Service Support Node umfasst.

7. System nach Anspruch 6, wobei das Mittel (12) zum Ändern der Quellzelle in die Zielzelle derart konfiguriert ist, dass es mit der mobilen Station (10) kommuniziert.

8. System nach Anspruch 7, wobei das Mittel (12) zum Informieren des Serving General Packet Radio Service Support Node über die Zelländerung dazu konfiguriert ist, nach dem Informieren keinen Zellaktualisierungsvorgang durchzuführen.

9. System nach Anspruch 6, wobei die paketvermittelte Übergabe innerhalb eines GSM/EDGE-Funkzugangsnetzes durchgeführt wird.

10. System nach Anspruch 6, welches ferner umfasst:
Mittel zum weiteren Weiterleiten der Downlink-Daten von der Quellzelle zur Zielzelle und zur Freigabe von Funkressourcen in der Quellzelle direkt nach der Zelländerung, was den unverzüglichen Neustart der Downlink-Datenübertragung ermöglicht, wodurch die durch die paketvermittelte Übergabe hervorgerufene Betriebsunterbrechung verkürzt wird.

## Revendications

1. Procédé pour améliorer les performances d'un transfert de données de liaison descendante durant un transfert à commutation de paquets, dans lequel ledit transfert à commutation de paquets correspond à une procédure de transfert intra-BSS optimisée, comprenant :
le fait de changer une cellule source en une cellule cible dans un contexte dudit transfert à commutation de paquets ; et
le fait d'informer un noeud de support de service général radio par paquets (14) dudit changement de cellule après ledit changement en tant que seule signalisation requise avec le noeud de support de service général radio par paquets pour permettre audit transfert de données de liaison descendante de recommencer immédiatement, pour réduire une interruption de service entraînée par ledit transfert à commutation de paquets, dans lequel ledit fait d'informer est réalisée par un sous-système de station de base (12) et ne comprend pas le fait d'envoyer un message d'une station mobile (10) audit noeud de support de service général radio par paquets.

2. Procédé selon la revendication 1, comprenant en outre :
le fait d'informer ladite station mobile (10) dudit changement de cellule après ledit changement, ce qui permet à un transfert de données de liaison montante de recommencer immédiatement, réduisant ainsi davantage ladite interruption de service entraînée par ledit transfert à commutation de paquets.

3. Procédé selon la revendication 1, dans lequel ledit fait de changer ladite cellule source en dite cellule cible est réalisé par ledit sous-système de station de base (12) communiquant avec ladite station mobile (10).

4. Procédé selon la revendication 1, dans lequel ledit transfert à commutation de paquets est réalisé à l'intérieur d'un réseau d'accès radio GSM/EDGE.

5. Produit programme d'ordinateur, comprenant :
une structure de stockage lisible par ordinateur incorporant un code de programme d'ordinateur sur celle-ci pour l'exécution par un processeur d'ordinateur, dans lequel ledit code de programme d'ordinateur comprend des instructions pour réaliser le procédé selon la revendication 3.

6. Système pour améliorer les performances d'un transfert de données de liaison descendante durant un transfert à commutation de paquets, dans lequel ledit transfert à commutation de paquets correspond à une procédure de transfert intra-BSS optimisée, comprenant :
des moyens (12) pour le fait de changer une cellule source en une cellule cible dans un contexte d'un transfert à commutation de paquets ; et
des moyens (12) pour le fait d'informer un noeud de support de service général radio par paquets (14) dudit changement de cellule après ledit changement en tant que seule signalisation requise avec le noeud de support de service général radio par paquets pour permettre de recommencer immédiatement un transfert de données de liaison descendante, pour réduire une interruption de service entraînée par ledit transfert à commutation de paquets, dans lequel lesdits moyens pour le fait d'informer comprennent un sous-système de station de base et dans lequel ledit fait d'informer ne comprend pas le fait d'envoyer un message d'une station mobile (10) audit noeud de support de service général radio par paquets.

7. Système selon la revendication 6, dans lequel lesdits moyens (12) pour le fait de changer ladite cellule source en dite cellule cible sont configurés pour communiquer avec ladite station mobile (10).

8. Système selon la revendication 7, dans lequel lesdits moyens (12) pour le fait d'informer ledit noeud de support de service général radio par paquets dudit changement de cellule sont configurés, après ledit fait d'informer, pour ne pas réaliser de procédure d'actualisation de cellule.

9. Système selon la revendication 6, dans lequel ledit transfert à commutation de paquets est réalisé à l'intérieur d'un réseau d'accès radio GSM/EDGE.

10. Système selon la revendication 6, comprenant en outre :
des moyens pour en outre réacheminer des données de liaison descendante de la cellule source à la cellule cible et pour libérer des ressources radio dans ladite cellule source juste après ledit changement de cellule, ce qui permet de recommencer immédiatement ledit transfert de données de liaison descendante, réduisant ainsi ladite interruption de service entraînée par ledit transfert à commutation de paquets.
